# EUROPÄISCHE PATENTSCHRIFT

(11) **EP 3 802 383 B1**
(45) Veröffentlichungstag und Bekanntmachung des Hinweises auf die Patenterteilung: **15.05.2024**
(21) Anmeldenummer: 19726593.7
(22) Anmeldetag: 16.05.2019
(51) Int. Cl.: B65G 47/84, B65G 47/71

(54) **WEICHENVORRICHTUNG**
SWITCH DEVICE
DISPOSITIF D'AIGUILLAGE

(30) Priorität: 06.06.2018 DE 102018208956
(43) Veröffentlichungstag der Anmeldung: 14.04.2021
(73) Patentinhaber: Bausch + Ströbel SE + Co. KG, 74532 Ilshofen (DE)
(72) Erfinder: KUPFER, Timo, 74423 Obersontheim (DE); SPIELER, Daniel, 74564 Crailsheim (DE)
(74) Vertreter: Weickmann & Weickmann PartmbB
(86) Internationale Anmeldenummer: PCT/EP2019/062571
(87) Internationale Veröffentlichungsnummer: WO 2019/233723

(56) Entgegenhaltungen:
- EP-A1- 3 178 765
- WO-A1-2015/000680
- DE-A1-102013 223 977
- DE-A1-102016 200 150
- DE-B- 1 084 640
- JP-A- S5 699 123
- JP-A- S6 186 308

## Beschreibung

Die vorliegende Erfindung betrifft eine Weichenvorrichtung für einen Übergabepunkt zwischen einem ersten und einem zweiten rotierbaren Sternrad, an welchem von dem ersten Sternrad Objekte selektiv zu dem zweiten Sternrad übergebbar sind.

Es sei darauf hingewiesen, dass in der gesamten vorliegenden Anmeldung der Begriff des "Sternrads" breit zu verstehen ist, so dass hierdurch nicht nur streng kreisförmige Transporteinheiten zu verstehen sind, sondern auch solche, deren Außenumfangsformen von einem Kreis abweichen und beispielsweise abschnittsweise abgeflacht sind oder unterschiedlich konvexe Abschnitte aufweisen. Im Extremfall können hierbei sogar vollständig geradlinige Transporteinheiten umfasst sein, die als "Räder" mit unendlichem Durchmesser aufgefasst werden können, wobei dann beispielsweise eine Übergabe von einer linearen Transporteinheit zu einer kreisförmigen Transporteinheit vorgesehen werden kann und ebenfalls von der vorliegenden Anmeldung umfasst sein soll. In jedem Fall sind außerhalb von Weichenvorrichtungen, welche dazu dienen, Objekte auf ein Sternrad zu übergeben oder von ihm zu einer anderen Transportvorrichtung zu übergeben, wenigstens in konvexen Abschnitten Vorrichtungen, wie beispielsweise Führungsschienen vorzusehen, mittels welcher die Objekte an dem entsprechenden Sternrad gehalten werden.

Die angesprochenen Weichenvorrichtungen werden unter anderem in der Verpackungsindustrie und beispielsweise auch in der chemischen und der Pharmaindustrie eingesetzt, um Objekte je nach ihrer Ausprägung selektieren zu können, d.h. einzelne Objekte aus einer Reihe ähnlicher Objekte aussortieren zu können, beispielsweise wenn sie fehlerhaft sind oder ähnliches.

Derartige als fehlerhaft erkannte Objekte können dann beispielsweise stromabwärts nach einer Vorrichtung, die die Fehlerhaftigkeit des jeweiligen Objektes detektiert hat, einem anderen Pfad zugeführt werden. Hierzu werden die Objekte am Außenumfang der bereits angesprochenen Sternräder geführt und von einem ersten Sternrad, von welchem sie zu einem entsprechenden Übergabepunkt angeliefert werden, dann an diesem Punkt ggf. an ein zweites Sternrad übergeben, von welchem sie auf einen anderen Pfad überführt werden, oder sie verbleiben an dem ersten Sternrad, um dann ebenfalls von dem Übergabepunkt abgeführt zu werden. Es versteht sich hierbei, dass der Begriff des "Übergabepunkts" nicht im streng geometrischen Sinne zu verstehen ist, sondern dass die Übergabe auch auf einem ausgedehnten streifenförmigen Bereich entlang der Bewegung der Objekte stattfinden kann.

Zu diesem Zweck sind bereits verschiedene Weichenvorrichtungen aus dem Stand der Technik bekannt, beispielsweise Vakuumräder, bei denen die Objekte an dem Außenumfang der jeweiligen Sternräder mittels Vakuumgreifern gehalten werden, die dann selektiv derart geschaltet werden können, dass an dem Übergabepunkt ein entsprechendes Objekt entweder an dem ersten Vakuum-Sternrad verbleibt oder an ein zweites Vakuum-Sternrad übergeben wird, so dass das Objekt anschließend auf einem gewünschten Pfad abgeführt werden kann. Derartige vakuumbetriebene Weichenvorrichtungen arbeiten zwar zuverlässig und können auch bei einem relativ niedrigen Objektabstand an den jeweiligen Sternrädern sicher betrieben werden, sie sind allerdings nicht immer in Reinräumen oder in einem Isolator einsetzbar, da beispielsweise aus pharmazeutischer Sicht aufgrund der möglichen Kontaminationen von außen durch Komponenten wie Schläuche, Vakuumpumpen, Ventile usw. eine Verunreinigung der hochsensiblen Objekte und ihrer Inhalte eintreten könnte.

Somit können in vielen Anwendungsbereichen für derartige gattungsgemäße Weichenvorrichtungen lediglich mechanische Weichen eingesetzt werden, wie sie beispielsweise aus der DE 10 2013 223 977 A1 bekannt sind. In dieser Druckschrift ist eine Vorrichtung offenbart, die zwischen zwei Sternrädern eine Weichenfunktion an einem Übergabepunkt erfüllt und hierzu ein einteiliges schwenkbares Element mit einer Führung für die von den Sternrädern getragenen Objekte aufweist, das in einer Weise verschwenkbar ist, die entweder ein Verbleiben der Objekte an dem ersten Sternrad oder eine Übergabe der Objekte an das zweite Sternrad bewirkt. Das genannte Führungselement ist allerdings zur Sicherstellung einer ausreichenden Führung der Objekte relativ lang ausgebildet, um ein Verkanten der Objekte bei ihrer Übergabe zuverlässig ausschließen zu können. Hierdurch wird jedoch andererseits eine relativ hohe Trägheit der Weichenfunktion erkauft, da sich, um aufeinanderfolgende Objekte überhaupt wirkungsvoll selektieren zu können, jeweils lediglich ein einzelnes Objekt innerhalb der Führungsvorrichtung befinden darf. Somit ist durch die Länge des Führungselements automatisch ein Mindestabstand zwischen zwei Objekten an den Sternrädern festgelegt, so dass hier relativ hohe Abstände und damit ein relativ niedriger Durchsatz an Objekten pro Zeiteinheit bei einer vorgegebenen Rotationsgeschwindigkeit der Sternräder vorgesehen werden muss. Dies geht offensichtlich auf Kosten der Effizienz der Anlage, wodurch diese im Betrieb teurer wird. Des Weiteren besteht bei der Vorrichtung aus der DE 10 2013 223 977 A1 die Gefahr, dass die Schwenkbewegung des Führungselements durch eindringenden Schmutz oder beispielsweise auch Scherben von beschädigten Objekten blockiert werden kann.

Ferner ist auch aus der JP S65 99123 A eine Weichenvorrichtung für einen Übergabepunkt zwischen einem ersten und einem zweiten rotierbaren Sternrad gemäß dem Oberbegriff des Anspruchs 1 bekannt mittels welcher selektiv von dem ersten Sternrad zu dem zweiten Sternrad Objekte übergebbar sind und welche zu diesem Zweck zwei vertikal verlagerbare Wandabschnitte umfasst.

Es ist daher die Aufgabe der vorliegenden Erfindung, eine gattungsgemäße Weichenvorrichtung bereitzustellen, die einerseits rein mechanisch arbeitet und daher auch in Umgebungen eingesetzt werden kann, in denen aufgrund der Gefahr von Kontaminierungen nicht auf vakuumbetriebene Weichen zurückgegriffen werden kann, die eine sichere Weichenfunktion bei geringeren Objektabständen und damit eine höhere Ausbringleistung des Systems ermöglicht und die zuletzt auch die Gefahr eines Blockierens eines Führungselements ausräumt, indem auf ein Schwenken eines solchen Elements verzichtet wird.

Zur Lösung dieser Aufgabe umfasst die erfindungsgemäße Weichenvorrichtung einen Unterboden wenigstens im Bereich des Übergabepunkts zum Abstützen der von den Sternrädern transportierten Objekte, einen ersten und einen zweiten Wandabschnitt, welche im Bereich des Übergabepunkts jeweils im Wesentlichen dem Außenumfang des ersten bzw. zweiten Sternrads folgend verlaufen und in vertikaler Richtung zwischen einer ersten Position, in welcher sie sich über den Unterboden hinaus erstrecken, und einer zweiten Position, in welcher sie sich nicht über den Unterboden hinaus erstrecken, verlagerbar sind, wenigstens einen Antriebsmechanismus zum Antreiben der Verlagerung der Wandabschnitte, und eine Steuerungseinrichtung zur Ansteuerung des wenigstens einen Antriebsmechanismus, wobei der erste und der zweite Wandabschnitt durch den wenigstens einen Antriebsmechanismus jeweils einzeln vertikal verlagerbar sind.

Durch den Verzicht auf ein schwenkendes Führungselement und die Verwendung von vertikal verlagerbaren Wandabschnitten kann einerseits der Abstand der von den Sternrädern getragenen Objekte kleiner gewählt werden und dadurch wie oben beschrieben die Ausbringleistung erhöht werden und andererseits wird die Gefahr eines Blockierens der Vorrichtung ausgeräumt, da die versenkbaren Wandabschnitte durch geeignete Spaltmaße wesentlich weniger empfindlich für das Eindringen von Schmutz und Verunreinigungen sind.

Erfindungsgemäß sind der erste Wandabschnitt und der zweite Wandabschnitt entlang ihres Verlaufs in jeweils wenigstens zwei Wandelemente unterteilt, welche durch den wenigstens einen Antriebsmechanismus jeweils einzeln vertikal verlagerbar sind. Hierbei ist sowohl die Form als auch die Anzahl der Wandabschnitte, die durchaus auch größer als zwei sein kann, auf die Form der zu transportierenden Objekte anpassbar.

Durch diese jeweils in Form wenigstens zweier Wandelemente ausgebildeten Wandabschnitte wird es möglich, eine zuverlässige Weichenfunktion auch für Objekte zu erreichen, die einen geringen Abstand am Außenumfang der Sternräder aufweisen.

Dieser Vorteil der erfindungsgemäßen Weichenvorrichtung wird noch deutlicher ausgeprägt, wenn der erste und der zweite Wandabschnitt jeweils in drei Wandelemente unterteilt sind, in welchen beispielsweise das Verhältnis der Längen der drei Wandelemente des ersten und zweiten Wandabschnitts bezüglich ihres Verlaufs jeweils etwa 2:1:1 beträgt. Hierbei kann die Länge des ersten Wandelements dann insbesondere etwa gleich dem Durchmesser der von den Sternrädern zu tragenden Objekte sein.

Um einen besonders sicheren Betrieb der erfindungsgemäßen Weichenvorrichtung hinsichtlich möglicher Verkantungen von Objekten oder auch Ablagerungen von Fremdstoffen sicherzustellen, können die Wandabschnitte in ihrer zweiten Position jeweils mit dem Unterboden ausgerichtet sein, um eine durchgehende ebene Fläche zu bilden.

In einer möglichen Ausführungsform kann jedem der Wandelemente ein eigener Antriebsmechanismus zugeordnet sein, beispielsweise ein elektromechanischer Antrieb, insbesondere ein Stellmotor, oder beispielsweise auch ein pneumatischer Antrieb. Da die derartigen, beispielhaft erwähnten elektromechanischen Stellmotoren in letzter Zeit sehr kostengünstig geworden sind und mit geringem Aufwand hochpräzise betreibbar sind, stellen sie eine optimale Möglichkeit zum Verlagern der einzelnen Wandelemente dar. Alternativ könnten jedoch auch komplexere mechanische Anordnungen eingesetzt werden, in denen eine geringere Zahl von Antriebsmechanismen als von Wandelementen vorgesehen wird und die jeweilige Bewegung dieser Antriebsmechanismen dann durch die genannten mechanischen Mittel in koordinierte Bewegungen der einzelnen Wandelemente umgesetzt wird.

Gemäß einem zweiten Aspekt betrifft die vorliegende Erfindung eine Transportvorrichtung für Objekte, insbesondere zylinderförmige Objekte wie Flaschen und/oder Ampullen, umfassend ein erstes und ein zweites Sternrad, welche derart angeordnet sind, dass zwischen ihnen ein Übergabepunkt gebildet ist, sowie eine erfindungsgemäße Weichenvorrichtung zur selektiven Übergabe von Objekten von dem ersten Sternrad zu dem zweiten Sternrad. Durch leichte Anpassungen der Geometrien der Sternräder und der Weichenvorrichtung, insbesondere der Wandabschnitte, können jedoch auch komplexer geformte Objekte mit der erfindungsgemäßen Vorrichtung transportiert werden.

Hierbei kann die Steuereinrichtung betriebsmäßig mit einer Steuereinheit für die beiden Sternräder derart gekoppelt sein, dass die Überführung der Wandelemente an die Rotationsgeschwindigkeit der Sternräder angepasst oder anpassbar ist. Alternativ könnte die Steuereinheit jedoch auch mit einem Sensor zur Erfassung der Rotation der Sternräder gekoppelt sein, so dass ein autarker Betrieb der Weichenvorrichtung hinsichtlich der Steuerung der Rotation der Sternräder durchgeführt werden kann.

Ferner kann die erfindungsgemäße Transportvorrichtung wenigstens eine Führungsschiene umfassen, welche sich in einer Verlängerung von wenigstens einem der Wandabschnitte erstreckt. Auf diese Weise kann sichergestellt werden, dass vor und/oder hinter dem Übergabepunkt die Objekte entlang ihrer vorgesehenen Bahnen weiter transportiert werden.

Zuletzt sei noch darauf hingewiesen, dass die erfindungsgemäße Transportvorrichtung modular aufgebaut sein kann, um auf verschiedene Geometrien und Abmessungen der zu transportierenden Objekte anpassbar zu sein. Hierzu kann beispielsweise ein System, bestehend aus mehreren Paaren von Sternrädern, die jeweils auf eine Art von Objekten abgestimmt sind, sowie einer jeweiligen zugehörigen Weichenvorrichtung vorgesehen werden, die in der Anzahl ihrer Wandelemente und deren Geometrien sowie auch ihrer Ansteuerung ebenfalls auf die entsprechenden Objekte angepasst ist. Somit können dann in einem Fall, in dem der Typ der zu transportierenden Objekte im Betrieb der Anlage geändert werden soll, die Sternräder und die Weichenvorrichtung gemeinsam ersetzt werden, während weitere Komponenten wie Antriebe und Zuführ- bzw. Abführvorrichtungen für die Objekte unverändert verbleiben können.

Weitere Merkmale und Vorteile der vorliegenden Erfindung werden aus der nachfolgenden Beschreibung einer Ausführungsform deutlich, wenn diese zusammen mit den beiliegenden Figuren betrachtet wird. Diese zeigen im Einzelnen:
- Figur 1: eine Vorderansicht eines im Übergabepunkt einer erfindungsgemäßen Transportvorrichtung befindlichen zylinderförmigen Objekts;
- Figuren 2a bis 2e: Draufsichten auf eine erfindungsgemäße Transportvorrichtung zu fünf aufeinanderfolgenden Zeitpunkten während einer Übergabe des Objekts aus Figur 1.

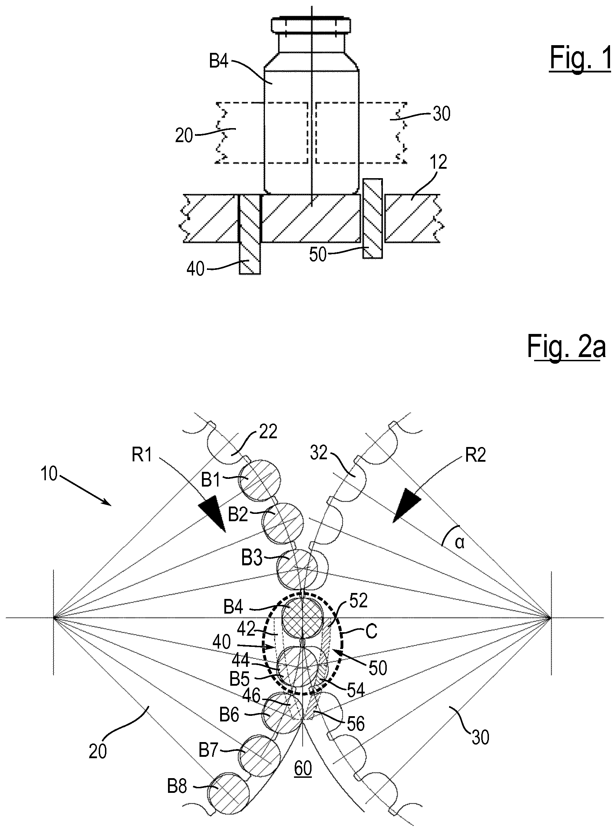

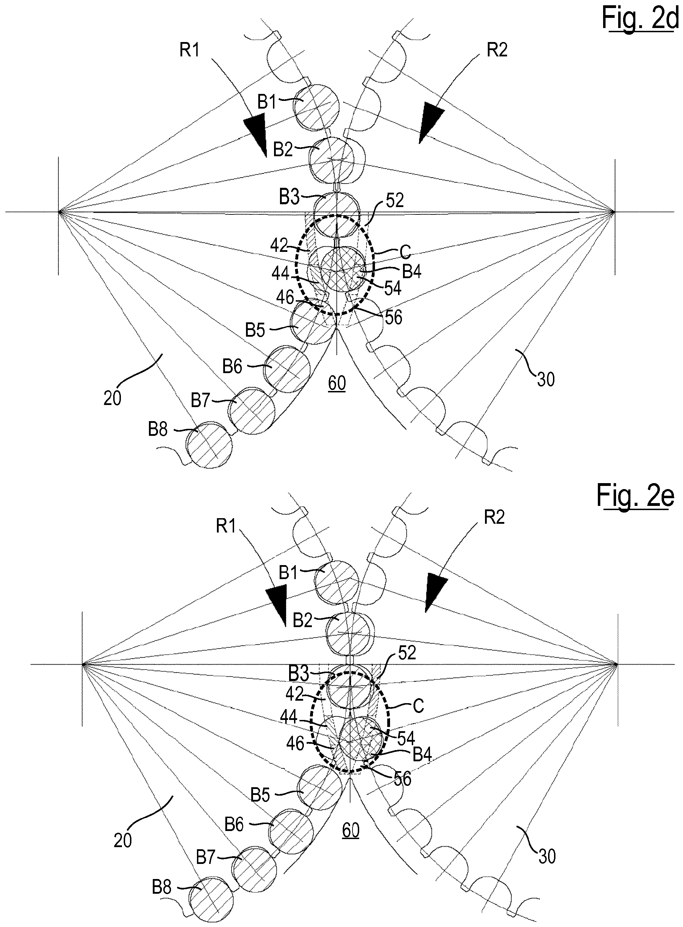

In Figur 1 ist zunächst ein Objekt B4 in einer Vorderansicht gezeigt, das sich momentan in einem Übergabepunkt C einer erfindungsgemäßen Transportvorrichtung 10 befindet, der in den Figuren 2a bis 2e besser zu erkennen sein wird. Bei dem Objekt B4 handelt es sich um ein im Wesentlichen zylindrisches Behältnis, wie es beispielsweise in der Pharmaindustrie eingesetzt wird. Es versteht sich, dass in einer Variante der in den Figuren gezeigten Vorrichtung diese auch zusammen mit anderen Objektgeometrien einsetzbar wäre.

Das Objekt B4 ist in Figur 1 auf einem Unterboden 12 abgestützt geführt und steht momentan mit einem ersten und einem zweiten Transportrad 20, 30 in Kontakt, die auch für den Vortrieb des Objekts B4 verantwortlich sind. Wie aus den nachfolgenden Figuren besser zu erkennen sein wird, ist das Objekt B4 momentan in Ausnehmungen 22, 32 an den beiden Sternrädern 20 und 30 in gleicher Weise aufgenommen.

Des Weiteren finden sich in den Unterboden 12 integriert zwei Wandelemente 40 und 50, die in der gezeigten Transportvorrichtung die erfindungsgemäße Weichenvorrichtung bilden. In dem in Figur 1 gezeigten Zustand ist der erste Wandabschnitt 40 nach unten in den Unterboden 12 eingezogen, so dass seine Oberseite plan mit dem Unterboden 12 ausgerichtet ist, während der zweite Wandabschnitt 50 mit seiner Oberseite über den Unterboden 12 hinaus angehoben ist. Die hierzu notwendige Verlagerung zwischen der vorstehenden ersten Position, in der sich der zweite Wandabschnitt 50 momentan befindet, und der zurückgezogenen zweiten Position, in der sich der erste Wandabschnitt 40 momentan befindet, wird hierbei von (nicht gezeigten) individuell angesteuerten Antrieben, beispielsweise elektromechanischen Stellmotoren, hervorgerufen, die von einer ebenfalls nicht gezeigten Steuereinrichtung koordiniert angesteuert werden. Es ist ersichtlich, dass der vorstehende zweite Wandabschnitt 50 für das Objekt B4 eine Führung in seitlicher Richtung darstellt, während das Objekt B4 andererseits über den zurückgezogenen ersten Wandabschnitt 40 einfach hinweggleiten könnte.

Wie sich aus den Figuren 2a bis 2e ergibt, wirken die Wandabschnitte 40 und 50 demzufolge als Weichenvorrichtung für an den Transporträdern 20 und 30 aufgenommene, also von dem ersten Sternrad 20 angelieferte Objekte. Zur Verdeutlichung sind hierzu in den Figuren 2a bis 2e insgesamt acht derartige Objekte B1 bis B8 gezeigt, von denen das momentan im Übergabepunkt C befindliche Objekt B4 bereits in Figur 1 gezeigt und weiter oben beschrieben worden war. Ferner ist in den Figuren 2a bis 2e jeweils die Drehrichtung der beiden Sternräder 20 und 30 durch entsprechende Pfeile dargestellt und mit den Bezugszeichen R1 und R2 bezeichnet. Hierbei dreht sich das erste Sternrad 20 im Uhrzeigersinn und das zweite Sternrad im Gegenuhrzeigersinn, wobei vom ersten Sternrad 20, wie bereits angesprochen, dementsprechend die Reihe von Objekten B1 bis B8 an das zweite Sternrad 30 herangeführt werden, bis sie im Übergabepunkt C mit beiden Sternrädern 20 und 30 in Kontakt stehen. Weiterhin soll darauf hingewiesen sein, dass die bereits angesprochenen Ausnehmungen 22 und 32 an den Außenumfängen der Sternräder 20 und 30 jeweils gleich beabstandet sind, nämlich hinsichtlich des gesamten Umfangs der Sternräder 20 und 30 jeweils um einen Winkel α.

Um die angesprochene Weichenfunktion, mittels welcher selektiv einzelne der Objekte B1 bis B8 von dem ersten Sternrad 20 auf das zweite Sternrad 30 übergeben werden können, auszuführen, sind die bereits angesprochenen ersten und zweiten Wandabschnitte 40 und 50 vorgesehen, wobei in den Figuren 2a bis 2e jeweils in der ersten Position, also nach oben aus dem Unterboden 12 ausgefahrene Wandelemente schraffiert dargestellt sind und in der zweiten Position befindliche, d.h. im Unterboden 12 versenkte Wandelemente lediglich mit ihren Umrissen dargestellt sind.

Aus den Figuren 2a bis 2e ist ferner ebenfalls zu entnehmen, dass die beiden Wandabschnitte 40 und 50 jeweils mehrteilig ausgebildet sind, nämlich jeweils dreiteilig mit drei Wandelementen 42, 44, 46 bzw. 52, 54, und 56. Hierbei folgen die Wandabschnitte im Wesentlichen Kreisbahnsegmenten, die um einen halben Durchmesser der Objekte B1 bis B8 gegenüber dem Außenumfang des entsprechenden Sternrads 20 bzw. 30 nach außen versetzt sind, so dass die in den Ausnehmungen 22 bzw. 32 aufgenommenen Objekte B1 bis B8 durch die Führungswirkung der Wandabschnitte 40 bzw. 50 gerade entlang des Außenumfangs des entsprechenden Sternrads 20 bzw. 30 geführt werden. Die Länge der einzelnen Wandelemente 42 bis 46 bzw. 52 bis 56 ist jeweils im Wesentlichen im Verhältnis 2:1:1 zum Radius der Objekte B1 bis B8 gewählt, wodurch sich besonders geringe Abstände der Objekte B1 bis B8 an den Außenumfängen der Sternräder 20 und 30 auslegen lassen, wie aus der nachfolgenden Beschreibung eines Weichenvorgangs deutlich werden wird. Wenngleich in den Figuren eine Vorrichtung mit jeweils dreiteiligen Wandabschnitten 40 und 50 gezeigt ist, so versteht sich, dass in einer Variante einer erfindungsgemäßen Ausführungsform diese auch jeweils ein-, zwei- oder mehrteilig ausgebildet sein könnten.

Beginnend bei der Figur 2a lässt sich erkennen, dass die Objekte B5 bis B8 bereits durch den Übergabepunkt C hindurchgelaufen sind, ohne von dem ersten Sternrad 20 an das zweite Sternrad 30 übergeben worden zu sein. Zu diesem Zweck waren sämtliche Wandelemente 52 bis 56 des zweiten Wandabschnitts 50 in ihrer jeweiligen ersten Position, d.h. sie erstreckten sich aus dem Unterboden 12 nach oben heraus und bildeten eine Führungsfläche zum Führen der Objekte B5 bis B8 entlang der Krümmung des ersten Sternrads 20, während die Wandelemente 42 bis 46 des ersten Wandabschnitts 40 in ihrer zweiten Position im Unterboden 12 versenkt waren, so dass die Objekte B5 bis B8 über sie hinweg gleiten konnten.

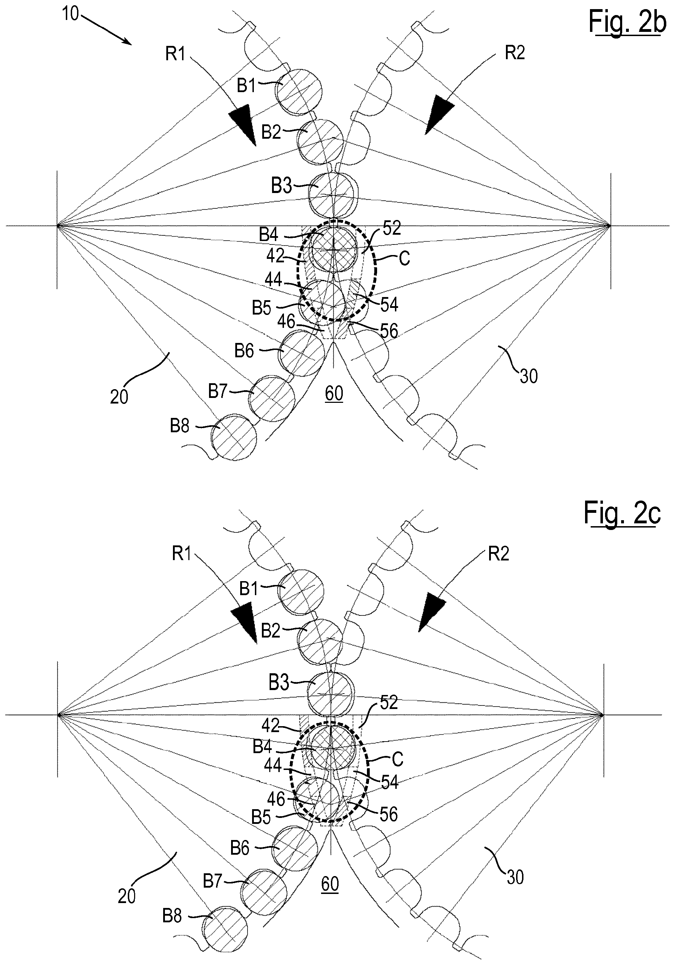

Nun soll jedoch das Objekt B4, das sich momentan im Übergabepunkt C befindet, auf das zweite Sternrad 30 übergeben werden. Dieser Übergabeprozess ist in den Figuren 2b bis 2e dargestellt. Hierzu werden zunächst, wie in Figur 2b gezeigt, die jeweiligen ersten Wandelemente 42 und 52 in ihre jeweils andere Position überführt, d.h. das Wandelement 42 in seine erste Position und das Wandelement 52 in seine zweite Position. Somit dient das erste Wandelement 42 des ersten Wandabschnitts 40 als Führungsfläche für das Objekt B4, während die weiterhin in ihrer ersten Position verbleibenden Wandelemente 54 und 56 unverändert als Führungsfläche für das am ersten Sternrad 20 verbleibende Objekt B5 dienen.

Anschließend geht nach einem Überstreichen eines vorbestimmten Rotationsbetrags durch die beiden Sternräder 20 und 30 die Weichenvorrichtung in den in Figur 2c gezeigten Zustand über, in dem zusätzlich das zweite Wandelement 54 des zweiten Wandabschnitts 50 in seine zweite Position überführt worden ist, so dass im Bereich der jeweiligen zweiten Wandelemente 44 und 54 keine Führungsfläche für die beiden momentan dort befindlichen Objekte B4 und B5 vorliegt. Dementsprechend wird das Objekt B4 weiterhin allein von dem ersten Wandelement 42 des ersten Wandabschnitts 40 geführt und das Objekt B5 allein vom dritten Wandelement 56 des zweiten Wandabschnitts 50 geführt, während im Bereich der jeweiligen zweiten Wandelemente 44 und 54 entgegengesetzte Bewegungen der Objekte B4 und B5 möglich sind.

Anschließend, nachdem das Objekt B5 aus dem Bereich des zweiten Wandelements 44 des ersten Wandabschnitts 40 herausgelaufen ist, wird dieses zweite Wandelement 44 ebenfalls in seine erste Position überführt, um eine Führungsfläche für das gerade in diesem Moment in seinen Bereich einlaufende Objekt B4 darzustellen. Im Wesentlichen gleichzeitig läuft das Objekt B5 aus dem Bereich des dritten Wandelements 56 des zweiten Wandabschnitts 50 heraus und tritt in den Bereich einer nachgelagerten Führungsschiene 60 ein, die im Wesentlichen hinter dem Übergabepunkt C an einer Stelle beginnt, an der der Weichenvorgang für die Objekte B1 bis B8 abgeschlossen ist.

Da somit eine Führung durch das dritte Wandelement 56 nicht mehr notwendig ist, kann dieses ebenfalls in seinen zweiten Zustand überführt werden, so dass, wie in Figur 2e gezeigt, das Objekt B4 darüber hinweglaufen kann. Nachdem nun das Objekt B5 allein von der Führungsschiene 60 geführt wird, kann zuletzt das dritte Wandelement 46 des zweiten Wandabschnitts 40 in seine erste Position überführt werden, um das Objekt B4 endgültig auf das zweite Sternrad 30 zu übergeben. Das auf dieses zweite Sternrad 30 übergebene Objekt B4 wird anschließend von der Führungsschiene 60 weitergeführt werden, bis es schließlich an einer späteren Position von dem zweiten Sternrad 30 entnommen und weitertransportiert werden kann.

Derweil ist ein weiteres nachfolgendes Objekt B3 in den Übergabepunkt C eingetreten, das wiederum an dem ersten Sternrad 20 verbleiben soll, weswegen die beiden ersten Wandelemente 42 und 52 jeweils wieder in ihre zweite bzw. erste Position überführt worden sind, um das Objekt B3 entlang des ersten Sternrads 20 zu führen.

Wie sich aus den Figuren 2a bis 2e ergibt, kann durch das Vorsehen und den koordinierten Betrieb der jeweils dreiteiligen Wandabschnitte 20 und 30 ein sehr geringer Abstand zwischen den einzelnen Objekten B1 und B8 erzielt werden, während das zuverlässige Durchführen der Weichenfunktion durch die Weichenvorrichtung dennoch sichergestellt ist.

## Patentansprüche

1. Weichenvorrichtung für einen Übergabepunkt (C) zwischen einem ersten und einem zweiten rotierbaren Sternrad (20, 30), an welchem von dem ersten Sternrad (20) Objekte (B1 - B8) selektiv zu dem zweiten Sternrad (30) übergebbar sind, umfassend:
- einen Unterboden (12) wenigstens im Bereich des Übergabepunkts (C) zum Abstützen der von den Sternrädern transportierten Objekte (B1 - B8);
- einen ersten und einen zweiten Wandabschnitt (40, 50), welche im Bereich des Übergabepunkts (C) jeweils im Wesentlichen dem Außenumfang des ersten bzw. zweiten Sternrads (20, 30) folgend verlaufen und in vertikaler Richtung zwischen einer ersten Position, in welcher sie sich über den Unterboden (12) hinaus erstrecken, und einer zweiten Position, in welcher sie sich nicht über den Unterboden (12) hinaus erstrecken, verlagerbar sind;
- wenigstens einen Antriebsmechanismus zum Antreiben der Verlagerung der Wandabschnitte (40, 50); und
- eine Steuerungseinrichtung zur Ansteuerung des wenigstens einen Antriebsmechanismus;
wobei der erste und der zweite Wandabschnitt (40, 50) durch den wenigstens einen Antriebsmechanismus jeweils einzeln vertikal verlagerbar sind.
**dadurch gekennzeichnet, dass**
der erste und der zweite Wandabschnitt (40, 50) entlang ihres Verlaufs in jeweils wenigstens zwei Wandabschnitte (42, 44, 46, 52, 54, 56) unterteilt sind, welche durch den wenigstens einen Antriebsmechanismus jeweils einzeln vertikal verlagerbar sind.

2. Weichenvorrichtung nach Anspruch 1, **dadurch gekennzeichnet, dass** der erste und der zweite Wandabschnitt (40, 50) jeweils in drei Wandelemente (42, 44, 46, 52, 54, 56) unterteilt sind.

3. Weichenvorrichtung nach Anspruch 2, **dadurch gekennzeichnet, dass** das Verhältnis der Längen der drei Wandelemente (42, 44, 46, 52, 54, 56) des ersten und zweiten Wandabschnitts (40, 50) bezüglich ihres Verlaufs etwa 2:1:1 beträgt.

4. Weichenvorrichtung nach einem der vorhergehenden Ansprüche, **dadurch gekennzeichnet, dass** die Wandabschnitte (40, 50) in ihrer zweiten Position jeweils mit dem Unterboden (12) ausgerichtet sind, um eine durchgehende ebene Fläche zu bilden.

5. Weichenvorrichtung nach einem der vorhergehenden Ansprüche, **dadurch gekennzeichnet, dass** jedem der Wandelemente (42, 44, 46, 52, 54, 56) ein eigener Antriebsmechanismus zugeordnet ist, beispielsweise ein elektromechanischer Stellmotor.

6. Transportvorrichtung für Objekte (B1 - B8), insbesondere zylinderförmige Objekte (B1 - B8) wie Flaschen und/oder Ampullen, umfassend ein erstes und ein zweites Sternrad (20, 30), welche derart angeordnet sind, dass zwischen ihnen ein Übergabepunkt (C) gebildet ist, sowie eine Weichenvorrichtung nach einem der vorhergehenden Ansprüche zur selektiven Übergabe von Objekten (B1 - B8) von dem ersten Sternrad (20) zu dem zweiten Sternrad (30).

7. Transportvorrichtung nach Anspruch 6, **dadurch gekennzeichnet, dass** die Steuereinrichtung betriebsmäßig mit einer Steuereinheit für die beiden Sternräder (20, 30) derart gekoppelt ist, dass die Überführung der Wandelemente (42, 44, 46, 52, 54, 56) an die Rotationsgeschwindigkeit der Sternräder (20, 30) angepasst oder anpassbar ist.

8. Transportvorrichtung nach einem der Ansprüche 6 oder 7, **dadurch gekennzeichnet, dass** sie ferner wenigstens eine Führungsschiene (60) umfasst, welche sich in einer Verlängerung von wenigstens einem der Wandabschnitte (40, 50) erstreckt.

## Claims

1. Switch device for a transfer point (C) between a first and a second rotatable star wheel (20, 30), at which transfer point objects (B1-B8) can be selectively transferred from the first star wheel (20) to the second star wheel (30), comprising:
- a base (12) at least in the region of the transfer point (C) for supporting the objects (B1-B8) transported by the star wheels;
- a first and a second wall portion (40, 50), which extend, in the region of the transfer point (C), so as to substantially follow the outer periphery of the first and second star wheels (20, 30), respectively, and are movable in the vertical direction between a first position, in which they extend beyond the base (12), and a second position, in which they do not extend beyond the base (12);
- at least one drive mechanism for driving the movement of the wall portions (40, 50); and
- a control means for actuating the at least one drive mechanism;
the first and second wall portions (40, 50) each being individually vertically movable by the at least one drive mechanism,
**characterized in that**
the first and second wall portions (40, 50) are each divided into at least two wall portions (42, 44, 46, 52, 54, 56) along the extension thereof, which at least two wall portions are each individually vertically movable by the at least one drive mechanism.

2. Switch device according to claim 1, **characterised in that** the first and second wall portions (40, 50) are each divided into three wall elements (42, 44, 46, 52, 54, 56).

3. Switch device according to claim 2, **characterised in that** the ratio of the lengths of the three wall elements (42, 44, 46, 52, 54, 56) of the first and second wall portions (40, 50) with respect to the extension thereof is approximately 2:1:1.

4. Switch device according to any of the preceding claims, **characterised in that** the wall portions (40, 50) are each aligned with the base (12) in their second position in order to form a continuously flat surface.

5. Switch device according to any of the preceding claims, **characterised in that** each of the wall elements (42, 44, 46, 52, 54, 56) is assigned its own drive mechanism, for example an electromechanical servomotor.

6. Transport device for objects (B1-B8), in particular cylindrical objects (B1-B8) such as bottles and/or ampoules, comprising a first and a second star wheel (20, 30), which are arranged such that a transfer point (C) is formed therebetween, and a switch device according to any of the preceding claims for selectively transferring objects (B1-B8) from the first star wheel (20) to the second star wheel (30).

7. Transport device according to claim 6, **characterised in that** the control means is operatively coupled to a control unit for the two star wheels (20, 30) such that the transfer of the wall elements (42, 44, 46, 52, 54, 56) is or can be adapted to the rotation speed of the star wheels (20, 30).

8. Transport device according to either claim 6 or claim 7, **characterised in that** it further comprises a guide rail (60) which extends in an extension of at least one of the wall portions (40, 50).

## Revendications

1. Dispositif d'aiguillage pour un point de transfert (C) entre une première et une deuxième roue en étoile (20, 30) rotative, au niveau duquel des objets (B1 - B8) peuvent être transférés de manière sélective de la première roue en étoile (20) à la deuxième roue en étoile (30), comprenant :
- un fond inférieur (12) au moins dans la zone du point de transfert (C) pour supporter les objets (B1 - B8) transportés par les roues en étoile ;
- une première et une deuxième section de paroi (40, 50) qui, dans la zone du point de transfert (C), s'étendent chacune essentiellement en suivant la circonférence extérieure de la première ou de la deuxième roue en étoile (20, 30) et peuvent être déplacées dans la direction verticale entre une première position dans laquelle elles s'étendent au-delà du fond inférieur (12) et une deuxième position dans laquelle elles ne s'étendent pas au-delà du fond inférieur (12) ;
- au moins un mécanisme d'entraînement pour entraîner le déplacement des sections de paroi (40, 50) ; et
- un dispositif de commande pour commander ledit au moins un mécanisme d'entraînement ;
dans lequel les première et deuxième section de paroi (40, 50) peuvent être déplacées verticalement individuellement par ledit au moins un mécanisme d'entraînement,
**caractérisé en ce que**
la première et la deuxième section de paroi (40, 50) sont divisées le long de leur extension en au moins deux sections de paroi (42, 44, 46, 52, 54, 56), qui peuvent être déplacées verticalement individuellement par ledit au moins un mécanisme d'entraînement.

2. Dispositif d'aiguillage selon la revendication 1, **caractérisé en ce que** la première et la deuxième section de paroi (40, 50) sont chacune divisées en trois éléments de paroi (42, 44, 46, 52, 54, 56).

3. Dispositif d'aiguillage selon la revendication 2, **caractérisé en ce que** le rapport des longueurs des trois éléments de paroi (42, 44, 46, 52, 54, 56) de la première et de la deuxième section de paroi (40, 50) est d'environ 2:1:1 par rapport à leur extension.

4. Dispositif d'aiguillage selon l'une quelconque des revendications précédentes, **caractérisé en ce que** les sections de paroi (40, 50), dans leur deuxième position, sont respectivement alignées avec le fond inférieur (12) pour former une surface plane continue.

5. Dispositif d'aiguillage selon l'une quelconque des revendications précédentes, **caractérisé en ce que** chacun des éléments de paroi (42, 44, 46, 52, 54, 56) est associé à un mécanisme d'entraînement propre, par exemple un servomoteur électromécanique.

6. Dispositif de transport d'objets (B1 - B8), notamment d'objets cylindriques (B1 - B8) tels que des bouteilles et/ou des ampoules, comprenant une première et une deuxième roue en étoile (20, 30) disposées de manière à former entre elles un point de transfert (C), ainsi qu'un dispositif d'aiguillage selon l'une des revendications précédentes pour transférer sélectivement des objets (B1 - B8) de la première roue en étoile (20) à la deuxième roue en étoile (30).

7. Dispositif de transport selon la revendication 6, **caractérisé en ce que** le dispositif de commande est couplé en fonctionnement à une unité de commande pour les deux roues en étoile (20, 30) de manière à ce que le transfert des éléments de paroi (42, 44, 46, 52, 54, 56) soit adapté ou adaptable à la vitesse de rotation des roues en étoile (20, 30).

8. Dispositif de transport selon l'une des revendications 6 ou 7, **caractérisé en ce qu'**il comprend en outre au moins un rail de guidage (60) s'étendant dans le prolongement d'au moins une des sections de paroi (40, 50).
